# EUROPEAN PATENT APPLICATION

(11) **EP 4 521 302 A1**
(43) Date of publication of application: **12.03.2025**
(21) Application number: 23196117.8
(22) Date of filing: 07.09.2023
(51) Int. Cl.: G06N 3/092, G06N 20/00, H04L 9/40, G06N 3/10

(54) **REINFORCEMENT LEARNING COMPUTER SYSTEMS FOR GRAPH-BASED ENVIRONMENTS**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

The present disclosure relates to reinforcement learning (RL) agents, for example for cybersecurity and network management applications. Proposed herein is an RL computer system comprising one or more processor modules configured to perform a task by enacting a series of actions on a graph-based environment, each action being defined by a series of two or more sub-actions, the RL computer system comprising a corresponding series of RL sub-agents, each RL sub-agent being configured to perform a respective sub-action of the series of sub-actions.

## Description

### FIELD

The present disclosure relates to reinforcement learning (RL) agents, for example for cybersecurity and network management applications.

More specifically, aspects relate to RL computer systems, computer systems for training such RL computer systems, computer-implemented methods of training such RL computer systems, computer-implemented methods of improving the security of computer networks, data processing systems configured to perform such methods, computer programs comprising instructions which, when the program is executed by a computer, cause the computer to carry out such methods, computer-readable data carriers having stored thereon such computer programs, and data carrier signals carrying such computer programs.

### BACKGROUND

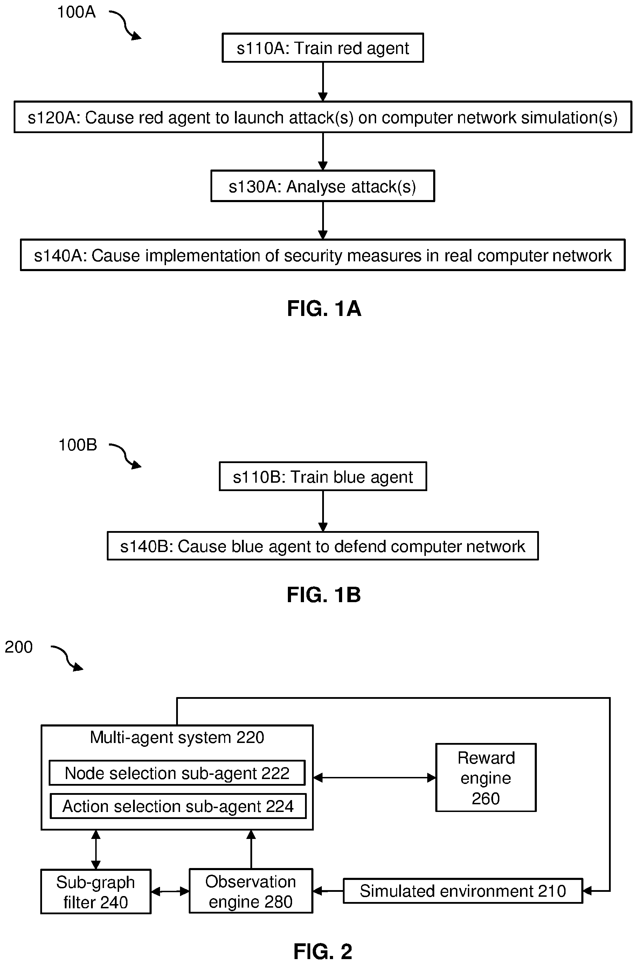

Machine learning 'red' agents can be used as illustrated in the method 100A of improving the security of a computer network shown in Figure 1A. At step s110A the red agent is trained on a computer network simulation, for example a simulation of the real computer network whose security is to be improved, or a similar network. At step s120A the red agent is caused to launch one or more attacks on one or more computer network simulations, for example the same simulation on which it was trained and/or similar simulations, such as simulations updated to take into account changes to the real computer network over time or tweaked to incorporate different and/or additional security measures which could be implemented. At step s130A an analysis of those one or more attacks is performed. Then at step s140A implementation of security measures in the real computer network is caused, based on that analysis.

Machine learning `blue' agents can be used as illustrated in the method 100B of improving the security of a computer network shown in Figure 1B. At step s110B the blue agent is trained on a computer network simulation, for example a simulation of the real computer network whose security is to be improved, or a similar network. At step s140B the blue agent is caused to defend the computer network.

One way of training cybersecurity agents is through reinforcement learning. RL agents learn through a feedback loop of observing the state of an environment and acting upon it. Each action is rewarded in accordance with whether it led the agent towards or away from its goal. The 'observation space' is a description of all of the possible states in which the environment can exist. The 'action space' is a description of all of the possible actions an agent is able to execute in the environment.

Large action spaces can lead to inefficient agent training, and even impractically long agent training times, especially if a large proportion of the action space corresponds to invalid or undesirable actions. This is for example the case when training a cybersecurity agent. The same problem can also arise when training agents for other purposes. For example, agents for managing logistical tasks such as rail network management can also have large action spaces. Similarly, agents for telecommunications network management generally have very large action spaces due to the large numbers of nodes involved. In general, action spaces tend to be large for agents configured to act on large networks, which can for example be represented as graphs of large numbers of nodes interconnected by edges. Action space reduction techniques are available, however they generally sacrifice specificity in the actions an agent is allowed, for the benefit of a smaller number of invalid or incorrect actions.

In order to make use of RL agents for complex tasks in graph-based environments such as cybersecurity infection modelling, telecommunications and other network management, and logistical task management, a more flexible and efficient approach is needed.

### SUMMARY

Aspects of the present disclosure are set out in the following clauses.
1. A reinforcement learning, `RL', computer system comprising one or more processor modules configured to perform a task by enacting a series of actions on a graph-based environment, each action being defined by a series of two or more sub-actions, the RL computer system comprising a corresponding series of RL sub-agents, each RL sub-agent being configured to perform a respective sub-action of the series of sub-actions.
2. The RL computer system of clause 1, wherein at least one sub-action of the series of sub-actions comprises node selection.
3. The RL computer system of either of clauses 1 or 2, wherein at least one sub-action of the series of sub-actions comprises application of a sub-graph filter to select a sub-graph from the graph represented in the graph-based environment.
4. The RL computer system of clause 3 as dependent on clause 2, wherein the sub-graph filter of clause 3 is configured to select a sub-graph comprising a node selected in the node selection sub-action of clause 2.
4a. The RL computer system of clause 4, wherein the sub-graph filter is configured so that the selected sub-graph:
   further comprises nodes within a predetermined number of hops of the node selected in the node selection sub-action of clause 2; and/or
   further comprises nodes having a quantitative characteristic beyond a threshold level, and optionally nodes intermediate those nodes and the node selected in the node selection sub-action of clause 2 on a path between them, that path optionally being a shortest path between them; and/or
   further comprises nodes determined to be similar to the node selected in the node selection sub-action of clause 2, and optionally nodes intermediate those nodes and the node selected in the node selection sub-action of clause 2 on a path between them, that path optionally being a shortest path between them; and/or
   excludes nodes greater than a predetermined number of hops from the node selected in the node selection sub-action of clause 2; and/or
   excludes nodes having a quantitative characteristic beyond a threshold level; and/or
   excludes nodes determined to be dissimilar to the node selected in the node selection sub-action of clause 2.
5. The RL computer system of any preceding clause, wherein each sub-action in the series is performed at a level of specificity greater than or equal to the last.
5a. The RL computer system of any preceding clause, wherein the graph-based environment is a computer network and the RL computer system is configured to act as a cybersecurity agent.
6. A computer system for training an RL computer system, the training system comprising:
   the RL computer system of any preceding clause, configured to enact a series of actions on a simulated graph-based environment; and
   a reward engine configured to provide a sub-reward to each of the series of RL sub-agents in response to each of the series of actions.
6a. The computer system of clause 6, further comprising the simulated graph-based environment, the simulated graph-based environment bing configured to provide a series of observations of the simulated graph-based environment to the RL computer system.
6b. The computer system of either of clauses 6 or 6a, further comprising a sub-graph filter configured to generate a sub-graph from an observation of the simulated graph-based environment for input to one or more of the series of RL sub-agents.
6c. The computer system of any of clauses 6 to 6b, further comprising an observation engine configured to tailor an observation of the simulated graph-based environment for input to one or more of the series of RL sub-agents.
7. A computer-implemented method of training the RL computer system comprising the RL computer system:
   a. receiving an observation of a simulated graph-based environment and a request to select an action from a training program;
   b. responsive thereto, each RL sub-agent selecting a respective sub-action;
   c. sending a response specifying all the selected sub-actions to the training program;
   d. subsequently receiving a reward from the training program; and
   e. updating the RL sub-agents in dependence on the reward;
   the method being performed iteratively until a termination criterion is reached.
8. The computer-implemented method of clause 7, wherein step b. comprises:
   b-i. a next RL sub-agent in the series of RL sub-agents selecting a sub-action in dependence on the observation;
   b-ii. tailoring the observation in dependence on that selected sub-action; and
   b-iii. iterating steps b-i. to b-ii. until all RL sub-agents in the series of RL sub-agents have selected a sub-action.
9. The computer-implemented method of clause 8, wherein:
   step b-i. further comprises determining whether the selected sub-action is valid; and
   step b-iii. comprises terminating the iterating in response to determining that the selected sub-action is invalid at step b-i.
9a. A computer-implemented method of training the RL computer system of any of clauses 1 to 5a, the method comprising a training program:
   i. sending an observation of a simulated graph-based environment and a request to select an action to the RL computer system;
   ii. receiving a response to the request, the response specifying a plurality of sub-actions;
   iii. updating the environment according to the plurality of sub-actions; and
   iv. assigning the RL computer system a reward determined in dependence on the response;
   the method being performed iteratively until a termination criterion is reached.
9b. The computer-implemented method of clause 9a, wherein step iv. comprises assigning a sub-reward to each RL sub-agent.
10. A computer-implemented method of improving the security of a computer network, the method comprising:
   performing the method of any of clauses 7 to 9b, wherein the graph-based environment is a computer network and the RL computer system is configured to act as a cybersecurity red agent;
   causing the cybersecurity red agent to launch one or more attacks on one or more computer network simulations;
   performing an analysis of those one or more attacks; and
   causing implementation of security measures in the computer network based on that analysis.
11. A computer-implemented method of improving the security of a computer network, the method comprising:
   performing the method of any of clauses 7 to 9b, wherein the graph-based environment is a computer network and the RL computer system is configured to act as a cybersecurity blue agent;
   causing the cybersecurity blue agent to defend the computer network.
11a. The computer system of any of clauses 1 to 6c, or the computer-implemented method of any of clauses 7 to 11, wherein the RL sub-agents each comprise a respective neural network.
12. A data processing system configured to perform the method of any of clauses 7 to 11.
13. A computer program comprising instructions which, when the program is executed by a computer, cause the computer to carry out the method of any of clauses 7 to 11.
14. A computer-readable data carrier having stored thereon the computer program of clause 13.
15. A data carrier signal carrying the computer program of clause 13.

### BRIEF DESCRIPTION OF THE FIGURES

Aspects of the present disclosure will now be described by way of example with reference to the accompanying figures. In the figures:
Figure 1A is a flowchart of an example computer-implemented method of improving the security of a computer network;
Figure 1B is a flowchart of another example computer-implemented method of improving the security of a computer network;
Figure 2 is a schematic diagram of an example training system for a multi-agent RL computer system;
Figure 3 illustrates an example system flow for training a multi-agent RL computer system;
Figure 4 is a schematic diagram of an example RL computer system in use;
Figure 5 is a flowchart illustrating an example computer-implemented method of training an RL computer system;
Figure 5A provides detail on Figure 5; and
Figure 6 is a schematic diagram of an example data processing system.

### DETAILED DESCRIPTION

Hierarchical multi-agent cooperative approaches for RL are approaches where multiple RL sub-agents cooperate together to accomplish a common goal and are structured in a hierarchical manner, either by decomposing actions into sub-actions, or by decomposing agents into layers.

Homogenous agents are agents which have the same observation and action space. Heterogeneous agents in contrast can have different observation and action spaces.

Proposed herein is a hierarchical multi-agent cooperative RL computer system comprising a series of heterogeneous RL sub-agents for performing a task in a graph-based environment. After the hierarchical multi-agent system has fully defined an action, that action can be executed on an environment and the multi-agent system can move on to the next action in the usual manner.

Using such a system, action spaces comprising multivariate actions (i.e. actions defined by multiple variables) can be subdivided between multiple hierarchical agents so that no one agent is required to handle the full action space of the task, i.e., the action space is effectively compressed. This increases training speed, so for the same time spent training more trial actions are performed and thus better agent performance can be achieved.

In addition, since the sub-agents are specialised, they can be efficiently trained in parallel with one another.

The first agent can for example determine an area of the graph (a sub-graph) on which to concentrate, then subsequent agents focus their efforts on the specific area selected for by the previous agent. A final agent in the series can determine the ultimate action to take. This delegates the decision making at various levels to different agents and significantly reduces the action space each agent is concerned with.

Using this type of multi-agent system means it is not necessary to consider the full detail of every node in the graph, instead the system can focus on the most relevant nodes, reducing the number of decisions needed.

Sample efficiency of the training process can also be improved since invalid actions can be dropped at a high level.

This approach can for example be used to train a cybersecurity red agent to attack a computer network simulation modelled as a topological graph. Nodes of the graph represent the various computer devices making up the network (e.g., end-host devices, servers, switches, routers, etc.). Links between nodes (edges) represent communication channels between the various devices. The red agent's goal can for example be to propagate malware throughout the entire network, or to infect one or more target devices. It typically starts from a single entry point (source node), with no knowledge of the remainder of the network. Through a training process it learns how to attack a network and identify attack paths from a given source device to one or more target devices.

An observation of the state of the environment can for example comprise:
1. a list of all the nodes in the network by their identifier (ID), along with their current state (0 = unknown to the agent; 1 = known to the agent but not compromised; 2 = known and compromised by the agent); and
2. a list of all the links in the network based on source and end node IDs, along with their current state (0 = unknown to the agent; 1 = known to the agent).

The observation can be translated into a vector of values, for example comprising node data followed by link data, e.g. [0, 0, 1, 2, 2, 0, ... 0, 1, 0, 0, 2, 0, ... ].

The agent can for example employ three types of action:
1. network discovery (`0') - the agent attempts to discover neighbouring nodes linked to a node the agent already controls;
2. system discovery (`1') - the agent attempts to discover additional information about a particular node, e.g. its vulnerabilities;
3. infect/exploit (`2') - the agent attempts to infect a target node, starting from an already controlled node.

To execute each of these actions, a conventional red agent must also specify two additional node IDs. In the case of system discovery and infect actions, the first node ID specifies the already compromised node from which the action starts, and the second node ID specifies the target of the action (respectively the node to gather intelligence on, and the node to infect). In the case of network discovery, the first node ID indicates that the network discovery is carried out from that node, while the second node ID is meaningless (but required so that all actions are specified in the same format for input to the single agent). The actions available to the agent can be represented by a triplet of values. The first value indicates the action type (either '0', '1' or '2') while the remaining values indicate the first and second node IDs, which can range from 0 to n-1, where n is the number of nodes in the network. For example, [2, 15, 8] specifies infection of node 8 from node 15.

The action space is large for large networks; 3n² for a network of n nodes. Computer networks typically consist of hundreds to thousands of nodes, which means the action space is in the order of tens of thousands to millions. In addition, many of the actions available for the agent to try are invalid, especially early in the process when very few nodes have been infected so most first node ID choices result in invalid actions. Since the agent samples actions at random it can take a long time for it to hit on enough positively rewarded actions to learn what makes an action desirable.

In addition, using a conventional single RL agent approach it is impossible to assign different rewards to different components of the action. Taking the above action as an example, it may be desirable to positively reward the selection of node 8 as the target of an infection if it is a valuable target to acquire. However, this information cannot be communicated to the agent if source node 15 is not currently compromised, and therefore the action is invalid so must be given a negative reward on that basis.

A multi-agent system can be configured to reduce the action space and optionally permit individualised rewards to sub-actions during training. Figure 2 shows an example training system 200 for such a multi-agent RL computer system 220. A simulated environment 210 provides an observation to the multi-agent system 220 (optionally via an observation engine 280 as will be described below) which selects an action to enact on the simulated environment 210. The multi-agent system 220 also informs a reward engine 260 of the action, which responds with a corresponding reward, causing updating of the multi-agent system 220. This cycle is iterated until a termination criterion is reached, for example a goal of the multi-agent system 220 being achieved or a predetermined maximum time or number of iterations having elapsed.

The multi-agent system 220 can comprise multiple tiered sub-agents. A top level sub-agent 222 can select the node to act on from the full network topology, with n possible options. A bottom level sub-agent 224 can select the specific action for the selected node. This can optionally be from a sub-view of the topology, focusing on a sub-graph comprising the selected node and one or more other nodes (such as its nearest neighbours) selected by a sub-graph filter 240. This significantly reduces the action space.

Rewards can be distributed to the sub-agents in various ways. For example, a single reward for the complete multivariate action selection can be given to all sub-agents. The sub-agents can then learn indirectly through the training process which sub-actions are preferred. For example, if a negative reward is initially given to action A enacted from node X then the system cannot know whether the selection of action A, node X, or both was bad. However, if a positive reward is subsequently given to actions B, C, D, and E enacted from node X then it can be surmised that node X is a good node to select and action A is a bad action. Alternatively, the efficiency of the training process can be increased by using a separate reward function for each sub-agent.

The system could consist of only the top and bottom level sub-agents as shown in Figure 2, or one or more intermediary sub-agents could also be included. Each successive sub-agent can select for more specific actions. For example, an intermediary sub-agent could select the action type (network discovery, system discovery, or infect) and the bottom level sub-agent could determine the precise action to run (e.g. port scan, exploit common vulnerabilities and exposures, `CVE', etc.).

Sub-graph filtering can be performed on a variety of criteria. For example, the sub-graph filter could return the selected node plus neighbours within a predetermined number of hops (e.g., only adjacent nodes, or adjacent nodes plus the nodes adjacent to them). Alternatively of additionally, the selected node plus nodes having certain quantitative or qualitative characteristics, for example nodes above a threshold criticality level, nodes having one or more characteristics in common with the selected node (e.g., operating system, type, applications/services running, ports open, criticality, etc.), or nodes determined to have above a threshold level of similarity with the selected node (e.g., based on a similarity metric). Optionally nodes present on paths between the selected node and the other nodes selected by the filter could also be returned, for example the nodes present on the shortest path between the selected node and each other node selected by the filter. The filter could also filter out certain nodes, for example nodes having certain quantitative or qualitative characteristics, e.g., nodes below a threshold criticality level, nodes not having one or more characteristics in common with the selected node (e.g., operating system, type, applications/services running, ports open, criticality, etc.), or nodes determined to have below a threshold level of similarity with the selected node (e.g., based on a similarity metric).

Each sub-action in the series of sub-actions can be performed at a level of specificity greater than or equal to the last. That is, the observation provided to each sub-agent in the series can comprise at least as much information/data on each node/edge it details as the last. In this way, the observation space experienced by one or more of the upper level sub-agents is compressed, meaning they can learn the same amount with fewer trial sub-actions. To achieve this, some tailoring of the observation can be performed before it is provided to each sub-agent in the series. For example, the observation received from the simulated environment could comprise full detail of every node, edge, and all their characteristics (e.g., operating system, type, applications/services running, ports open, criticality, etc.), but this observation could be stripped of all but the graph topology for input to a top level node selection sub-agent. The observation provided to a bottom level action selection sub-agent on the other hand could comprise all the node and edge characteristics detailed in the original/raw observation received from the simulated environment. This increase in observation detail provided to the bottom level agent can be offset by application of a sub-graph filter; i.e., more detail is provided on each node and edge, but only for a subset of the full set of nodes and edges, to reduce the observation to a more manageable size. Tailoring of the observation provided to each sub-agent can for example be performed by an observation engine 280 as shown in Figure 2. The observation engine 280 receives an observation from the simulated environment 210 and tailors this, optionally using one or more messages exchanged with the sub-graph filter 240, for input to each of the sub-agents. (The observation engine can for example provide one or more sub-agents with the raw observation it received from the simulated environment 210, and can provide one or more other sub-agents with an edited version of the raw observation, for example compressed via removing details of all nodes and edges but for those specified by a sub-graph filter, and/or compressed via removing one or more types of metadata associated with each node and/or edge in the raw observation.)

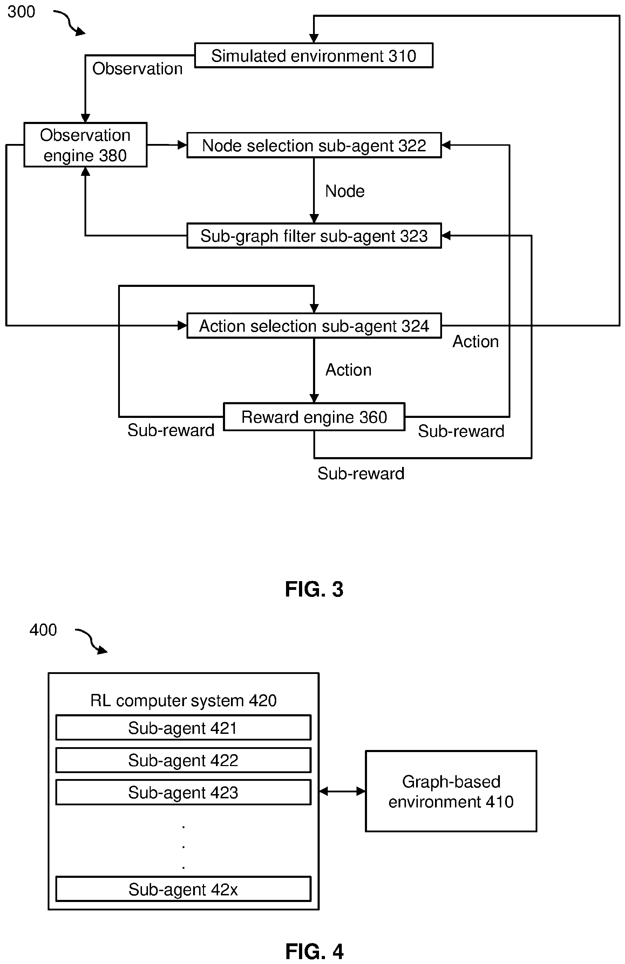

Figure 3 illustrates an example system flow 300 in which sub-rewards are assigned to respective sub-agents to train them individually. In this example, the sub-graph filter is implemented as an intermediate sub-agent, rather than a separate module as in the example of Figure 2. An observation of the state of a simulated environment 310 is sent to an observation engine 380. The observation engine 380 tailors the observation as required for a node selection sub-agent 322 (for example by pruning it to comprise only topological data). The node selection sub-agent 322 receives the tailored observation from the observation engine 380 and selects a node, then sends its selection to a sub-graph filter sub-agent 323. The sub-graph filter sub-agent 323 configures a sub-graph filter and provides this to the observation engine 380, which uses it to generate an observation of a sub-graph comprising the selected node, tailored for an action selection sub-agent 324. In this way, the action selection sub-agent 324 is provided with a compressed action space. The action selection sub-agent 324 then ingests this sub-graph observation (e.g., including the status and other characteristics of devices and links respectively represented by nodes and edges in the sub-graph) and determines a specific action to be executed. This action is then executed in the simulated environment 310 and a reward engine 360 issues appropriate sub-rewards to each of the sub-agents 322, 323, and 324. The sub-agents 322, 323, and 324 are then updated (e.g., by modifying weights in respective neural networks) using the sub-rewards. This cycle is iterated until a termination criterion is reached, for example the system's goal being achieved or a predetermined training duration or number of iterations elapsing.

Implementing the sub-graph filter in a sub-agent means that the system learns the most suitable filter technique to apply in different scenarios. This can be done using a separate sub-graph filter sub-agent as shown in Figure 3, or the sub-graph filter can be incorporated into another sub-agent. For example, a top level agent can specify both a selected node and one or more filter criteria.

Resources such as time, power, and memory can be saved by terminating invalid actions as soon as an invalid sub-action is selected. For instance, if a node selection sub-agent selects a node it does not yet know exists, that sub-agent can be given a negative sub-reward, since the action is invalid, and the process need not progress to sub-action selection by the other sub-agents.

When the RL system is for performing multivariate actions defined by v variables, each sub-action selected by a respective sub-agent can be defined by up to v-1 of those variables; i.e. one or more of the sub-actions can themselves be multivariate. For example, in the system 300 the node selection sub-agent 322 is defined by one of the variables defining the overall action (source node), the action selection sub-agent is defined by the remaining variables defining the overall action (action type and, when applicable, target node), and the sub-graph filter sub-agent 323 is ancillary, in the sense that it does not define any of the variables defining the overall action.

Another type of agent the above-described approach can be used for is a cybersecurity blue agent. A blue agent typically starts training with full knowledge of a simulated network and a simulated attack on it (e.g., a probabilistically modelled threat). Its goal can for example be to minimise the number of infections in the network, maximise an overall network health score, or protect one or more critical assets. It can for example take actions such as running endpoint detection scans, patching devices, quarantining machines, updating software, blocking domains, blocking ports, and restricting software access. Those actions can for example be decomposed into action type and node selection sub-actions (e.g. 'action = patch node 5' can be decomposed into 'sub-action type = patch', 'target node = 5').

Figure 4 schematically illustrates a computer system 400 comprising a generalised RL computer system 420 configured to perform a task by enacting a series of actions on a graph-based environment 410, each action being defined by a series of two or more sub-actions, the RL system comprising a corresponding series of RL sub-agents 421, 422, 423, ... 42x, each RL sub-agent being configured to perform a respective sub-action of the series of sub-actions. (Note that, although four sub-agents are depicted, the RL computer system 420 can comprise any number of sub-agents greater than or equal to two.)

One or more sub-actions of the series of sub-actions can comprise node selection. For example, the first sub-agent in the series, 421, can be a node selection sub-agent like the node selection sub-agents 222 and 322 of Figure 2 and 3 respectively, which can for example select a source node for a cybersecurity red agent action. A later sub-agent in the series, for example a last sub-agent in the series, 42x, can alternatively or additionally comprise node selection like the action selection sub-agents 224 and 324 of Figures 2 and 3 respectively, which can for example select a target node for a cybersecurity red agent infect action.

One or more sub-actions of the series of sub-actions can comprises application of a sub-graph filter to select a sub-graph from the graph represented in the graph-based environment. For example, one of the sub-agents 421, 422, 423, ... 42x can be a sub-graph filter sub-agent like the sub-graph filter sub-agent 323 of Figure 3.

As in the example of Figure 3, the sub-graph filter can be configured to select a sub-graph comprising a node selected in a preceding node selection sub-action. The sub-graph filter can in that case be configured so that the selected sub-graph:
- further comprises nodes within a predetermined number of hops of the selected node; and/or
- further comprises nodes having a quantitative characteristic beyond a threshold level (e.g., above a numerical criticality indicator threshold), and optionally nodes intermediate those nodes and the selected node on a path between them, that path optionally being a shortest path between them; and/or
- further comprises nodes determined to be similar to the selected node, and optionally nodes intermediate those nodes and the selected node on a path between them, that path optionally being a shortest path between them; and/or
- excludes nodes greater than a predetermined number of hops from the selected node; and/or
- excludes nodes having a quantitative characteristic beyond a threshold level (e.g., below a numerical criticality indicator threshold); and/or
- excludes nodes determined to be dissimilar to the selected node.

Alternatively, the sub-graph filter can filter only on other criteria. For example, it could select a sub-graph comprising only previously discovered nodes and edges (to avoid invalid actions being performed), or it could select a sub-graph comprising the highest criticality node not yet characterised and its nearest neighbours (to focus characterisation efforts appropriately).

The graph-based environment 410 can optionally be a computer network and the RL computer system 420 can be configured to act as a cybersecurity agent. Alternatively, the graph-based environment 410 can be a telecommunications network and the RL computer system 420 can be configured to act as a telecommunications network management agent. As another example, the graph-based environment 410 can be a rail network and the RL computer system 420 can be configured to act as a rail network management agent.

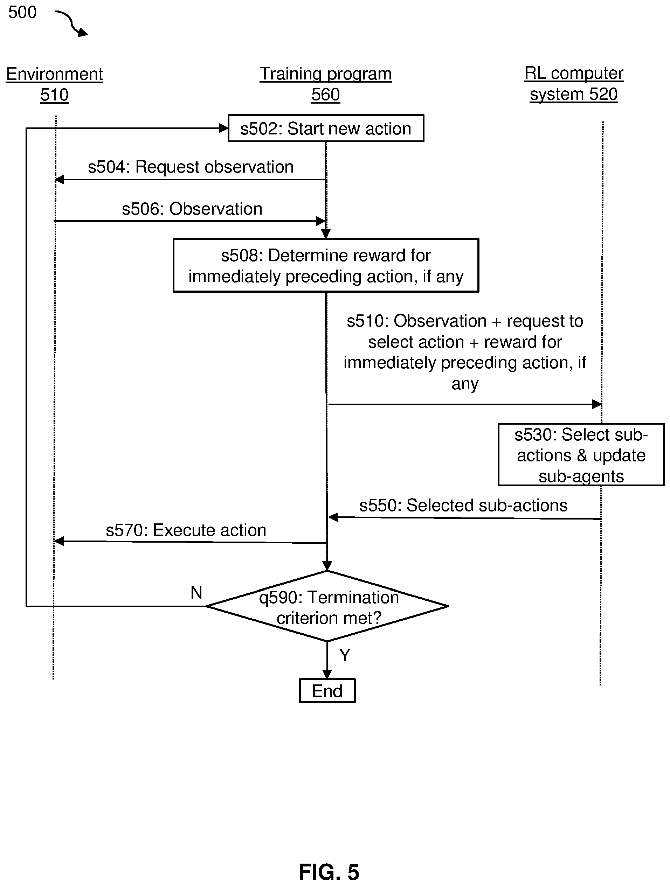

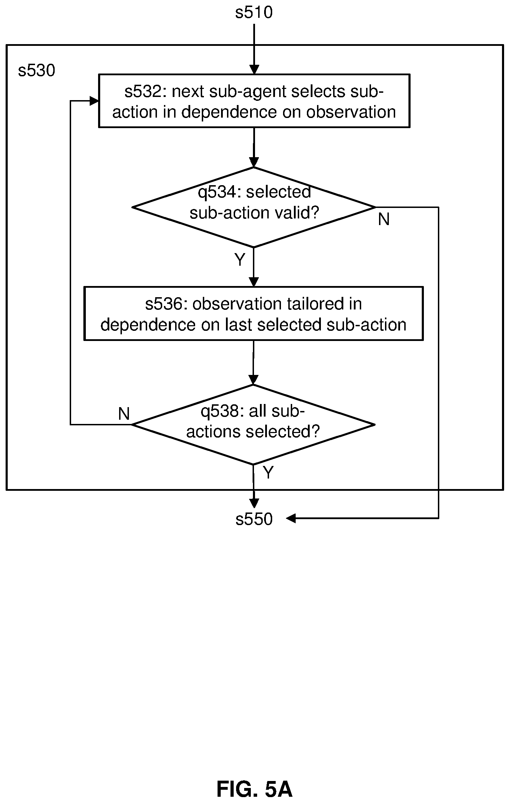

Figure 5 is a flowchart illustrating a computer-implemented method 500 of training an RL computer system 520 like the RL computer system 420 of Figure 4. At step s502 a training program 560 starts a new action. It then requests an observation from a simulated environment 510 at step s504. The simulated environment 510 responds at step s506. The training program 560 sends the observation received from the simulated environment 510, together with a request to select an action, to the RL computer system 520 at step s510. In response to receiving the observation and request, each RL sub-agent selects a respective sub-action at step s530. The RL computer system 520 then sends a response specifying all the selected sub-actions to the training program 560 at step s550. The training program 560 then executes the action in the environment 510 at step s570. (If the action is invalid, the environment's state does not change, but the environment still needs to be updated to ensure that any normally occurring processes still take place, for example, any background traffic sent over the simulated network.) The training program then determines at query q590 whether a termination criterion has been met and, if so, ends the process. If not, the process flow loops back for another iteration starting at step s502. On second and subsequent iterations, the training program 560 additionally determines a reward for the immediately preceding action at step s508. (That reward can optionally comprise individual sub-rewards for each sub-agent.) Step s510 then comprises sending that reward to the RL computer system 520. Step s530 further comprises updating the RL sub-agents in dependence on that reward.

Figure 5A illustrates an example of how step s530 of Figure 5 can be performed. At step s532 a next RL sub-agent in the series of RL sub-agents selects a sub-action in dependence on the observation received at step s510. Then at step s536 the observation is tailored in dependence on that selected sub-action (for example it can be pruned to only comprise a sub-graph selected at step s532). At query q538 it is determined whether all RL sub-agents in the series of RL sub-agents have selected a sub-action. If so, the process proceeds to step s550. If not, the process begins another iteration from step s532, this time using the tailored version of the observation.

Optionally, query q534 can be implemented after step s532 to determine whether the selected sub-action is valid. If so, the process proceeds to step s536. If not, the process proceeds directly to step s550.

### Suitable data processing system

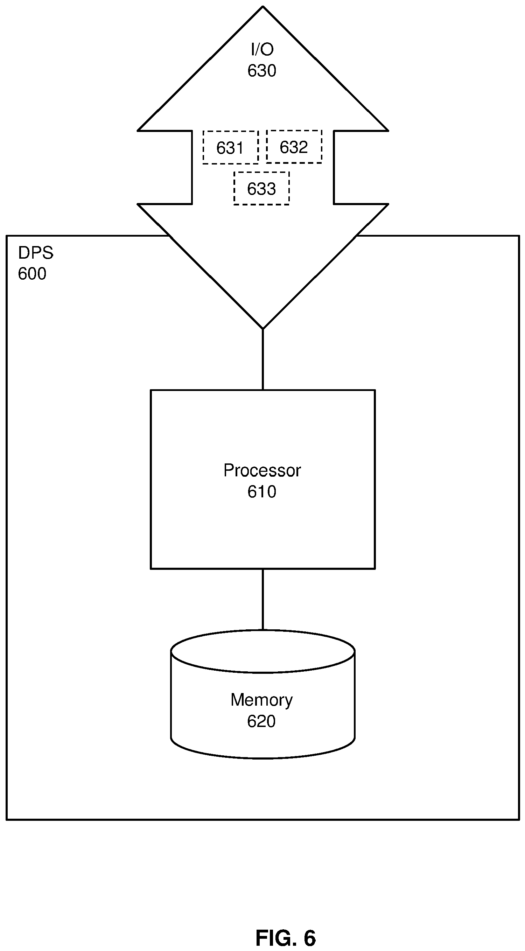

Figure 6 schematically illustrates an example data processing system (DPS) 600 capable of performing any of the methods described above. It comprises a processor 610 operably coupled to both a memory 620 and an interface (I/O) 630.

The memory 620 can optionally comprise computer program instructions which, when the program is executed by the processor 610, cause the data processing system 600 to carry out any of the methods described above. Alternatively or additionally, the interface 630 can optionally comprise one or both of a physical interface 631 configured to receive a data carrier having such instructions stored thereon and a receiver 632 configured to receive a data carrier signal carrying such instructions.

The receiver 632, when present, can be configured to receive messages. It can comprise one or more wireless receiver modules and/or one or more wired receiver modules. The interface 630 can optionally comprise a transmitter 633 configured to transmit messages. The transmitter 633, when present, can comprise one or more wireless transmitter modules and/or one or more wired transmitter modules.

The data processing system 600 can be a single computing device or multiple communicatively coupled computing devices. For example, the simulated environment 510, training program 560 and RL computer system 520 of Figure 5 can all reside on separate computing devices, or two or all of them can reside on a single computing device. Similarly, the RL sub-agents 421, 422, 423, ... 42x of Figure 4 can all reside on separate computing devices or two or more of them can reside on the same computing device. Similarly, the simulated environment 210, node selection sub-agent 222, action selection sub-agent 224, sub-graph filter 240, reward engine 260, and observation engine 280 of Figure 2 can all reside on separate computing devices or two or more of them can reside on the same computing device.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims and clauses, features from dependent claims/clauses may be combined with those of the independent claims/clauses and features from respective independent claims/clauses may be combined in any appropriate manner and not merely in the specific combinations enumerated in the claims/clauses. Combinations may include features from both the claims and the clauses.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

## Claims

1. A reinforcement learning, `RL', computer system comprising one or more processor modules configured to perform a task by enacting a series of actions on a graph-based environment, each action being defined by a series of two or more sub-actions, the RL computer system comprising a corresponding series of RL sub-agents, each RL sub-agent being configured to perform a respective sub-action of the series of sub-actions.

2. The RL computer system of claim 1, wherein at least one sub-action of the series of sub-actions comprises node selection.

3. The RL computer system of either of claims 1 or 2, wherein at least one sub-action of the series of sub-actions comprises application of a sub-graph filter to select a sub-graph from the graph represented in the graph-based environment.

4. The RL computer system of claim 3 as dependent on claim 2, wherein the sub-graph filter of claim 3 is configured to select a sub-graph comprising a node selected in the node selection sub-action of claim 2.

5. The RL computer system of any preceding claim, wherein each sub-action in the series is performed at a level of specificity greater than or equal to the last.

6. A computer system for training an RL computer system, the training system comprising:
the RL computer system of any preceding claim, configured to enact a series of actions on a simulated graph-based environment; and
a reward engine configured to provide a sub-reward to each of the series of RL sub-agents in response to each of the series of actions.

7. A computer-implemented method of training the RL computer system of any of claims 1 to 5, the method comprising the RL computer system:
a. receiving an observation of a simulated graph-based environment and a request to select an action from a training program;
b. responsive thereto, each RL sub-agent selecting a respective sub-action;
c. sending a response specifying all the selected sub-actions to the training program;
d. subsequently receiving a reward from the training program; and
e. updating the RL sub-agents in dependence on the reward;
the method being performed iteratively until a termination criterion is reached.

8. The computer-implemented method of claim 7, wherein step b. comprises:
b-i. a next RL sub-agent in the series of RL sub-agents selecting a sub-action in dependence on the observation;
b-ii. tailoring the observation in dependence on that selected sub-action; and
b-iii. iterating steps b-i. to b-ii. until all RL sub-agents in the series of RL sub-agents have selected a sub-action.

9. The computer-implemented method of claim 8, wherein:
step b-i. further comprises determining whether the selected sub-action is valid; and
step b-iii. comprises terminating the iterating in response to determining that the selected sub-action is invalid at step b-i.

10. A computer-implemented method of improving the security of a computer network, the method comprising:
performing the method of any of claims 7 to 9, wherein the graph-based environment is a computer network and the RL computer system is configured to act as a cybersecurity red agent;
causing the cybersecurity red agent to launch one or more attacks on one or more computer network simulations;
performing an analysis of those one or more attacks; and
causing implementation of security measures in the computer network based on that analysis.

11. A computer-implemented method of improving the security of a computer network, the method comprising:
performing the method of any of claims 7 to 9, wherein the graph-based environment is a computer network and the RL computer system is configured to act as a cybersecurity blue agent;
causing the cybersecurity blue agent to defend the computer network.

12. A data processing system configured to perform the method of any of claims 7 to 11.

13. A computer program comprising instructions which, when the program is executed by a computer, cause the computer to carry out the method of any of claims 7 to 11.

14. A computer-readable data carrier having stored thereon the computer program of claim 13.

15. A data carrier signal carrying the computer program of claim 13.
